# EUROPÄISCHE PATENTSCHRIFT

(11) **EP 1 452 783 B1**
(45) Veröffentlichungstag und Bekanntmachung des Hinweises auf die Patenterteilung: **17.09.2008**
(21) Anmeldenummer: 04002641.1
(22) Anmeldetag: 06.02.2004
(51) Int. Cl.: F16H 61/26, F16H 63/30, C23C 8/38

(54) **Baueinheit einer Schalteinrichtung und Verfahren zur Herstellung der Baueinheit**
Assembly of a switching device and process of making this assembly
Ensemble d'un dispositif de couplage et procede de fabrication de cet ensemble

(30) Priorität: 25.02.2003 DE 10307881
(43) Veröffentlichungstag der Anmeldung: 01.09.2004
(73) Patentinhaber: Schaeffler KG, 91074 Herzogenaurach (DE)
(72) Erfinder: Maier, Waldemar, 91074 Herzogenaurach (DE); Kern, Roland, 91074 Herzogenaurach (DE); Rost, Günter, 91475 Lonnerstadt (DE); Besenbeck, Kurt, 91074 Herzogenaurach (DE)

(56) Entgegenhaltungen:
- DE-A1- 3 922 983
- DE-A1- 4 020 160
- DE-C- 848 728

## Beschreibung

### Gebiet der Erfindung

Die Erfindung betrifft eine Baueinheit einer Schalteinrichtung und ein Verfahren zu deren Herstellung, wobei die Baueinheit unabhängig von der Schalteinheit vorgefertigt ist und dabei in der Baueinheit zumindest ein Maschinenteil aus einem Eisenwerkstoff und wenigstens ein das Maschinenteil tragender Träger aus einem Eisenwerkstoff zusammengefasst sind und wobei das Maschinenteil um eine Drehachse relativ zu dem Träger wenigstens schwenkbar mit dem Träger verbunden ist.

### Hintergrund der Erfindung

Derartige Baueinheiten sind z. B. Schalt- oder Wählwelleneinheiten in Getrieben von Automobilen und Zweirädern. Die Erfindung betrifft auch weitere Baueinheiten, in denen zueinander bewegliche und aneinander befestigte Getriebeelemente vor ihrem Einbau in das Fahrzeuggetriebe zu der Baueinheit vormontiert sind. Dabei weisen die Baueinheiten mindestens einen Träger auf, der z. B. als ein relativ zu dem Getriebe schwenkbarer Hebel ausgebildet ist und der z. B. ein Maschinenteil in Form einer drehbeweglich an dem Hebel befestigten Rolle oder in Form eines an dem Hebel schwenkbar befestigten zweiten Hebels aufnimmt. Die Dreh- bzw. Schwenkverbindung zwischen den zueinander dreh- bzw. schwenkbeweglich und aneinander befestigten Einzelteilen der Baueinheit ist beispielsweise durch einen Schwenkzapfen an einem der Einzelteile der Baueinheit oder durch einen gesonderten Schwenkbolzen gebildet. Das schwenkbare Maschinenteil sitzt dann beispielsweise mit einer Spielpassung auf dem Schwenkbolzen bzw. Schwenkzapfen.

In der gattungsgemäßen DE 40 20 160 A1 ist eine derartige Baueinheit in Form einer Wählschwinge beschrieben. Die Wählschwinge ist aus einem hebelartigen Träger einer Rolle und einem Bolzen gebildet und sitzt im Getriebe verdrehfest auf einer Schaltwelle. Dabei ist die Rolle drehbar auf dem fest an dem Träger befestigten Bolzen gelagert.

Bei der Herstellung von Fahrzeuggetrieben wird immer mehr dazu übergegangen, die Bauteile des Getriebes nicht einzeln, sondern mehrere Bauteile als vormontierte Baueinheiten zusammengesetzt in das Getriebe einzusetzen. Die Vorteile des Einsatzes von Baueinheiten liegen auf der Hand. Der logistische Aufwand zur Lagerung und Lieferung der Getriebebauteile und die Montagezeiten Getriebe sind reduziert. Fehlmontagen werden vermieden. Durch ihre unterschiedliche Funktion in der Baueinheit und durch die Anwendung unterschiedlicher Verfahren bei ihrer Herstellung sind die Bauteile häufig aus unterschiedlichen Eisen- bzw. Stahlwerkstoffen hergestellt. Die Einzelteile derartiger Baueinheiten nach dem Stand der Technik werden vor ihrer Montage zu der Baueinheit sich von Bauteil zu Bauteil unterscheidenden Wärmebehandlungen und Beschichtungsverfahren ausgesetzt. Das führt dazu, dass dem Fachmann nur eine begrenzte Auswahl an Verbindungstechniken zum Verbinden der Bauteile zu der Baueinheit zur Verfügung steht. So sind z. B. gehärtete Bauteile kaum oder nicht schweißbar. Da das Schweißen insbesondere in der Großserien- und Massenproduktion ein kostengünstiges Fügeverfahren ist, wird häufig zunächst auf das Härten der Einzelteile vor dem Zusammenbau verzichtet. Nach dem Zusammenbau von Unterbaueinheiten bzw. nach dem Verbinden der Bauteile zu der Baueinheit sind dann die beanspruchten Stellen oftmals partiell, z. B. induktiv, gehärtet. Derartig aufwändige Behandlungen machen den durch die Verwendung von Baueinheiten bei der Montage ins Getriebe an sich entstandenen Kostenvorteil zumindest teilweise zunichte. Vor dem Verbinden zur Baueinheit gehärtete Teile sind oftmals, z. B. im Bereich der drehbaren Verbindung mit einem Aufmaß versehen, um die durch Härteverzug oder Geometrieänderung beim Härten entstandenen Fehler durch spanabhebende Nacharbeit ausgleichen zu können. Die spanabhebende Nacharbeit ist ein weiterer kostenerhöhender Faktor und daher nachteilig. Häufig wird auf eine Nacharbeit der Teile verzichtet. Der Härteverzug und die Geometrieänderungen durch das Härten sind dann durch entsprechende Vorhaltemaße in der Größe des Wärmeverzuges und der Volumenänderungen bei der Auslegung der Teile, insbesondere an dem Schwenk- bzw. Drehsitz berücksichtigt. In diesem Fall sind zu große oder zu kleine Spiele in der Schwenk- bzw. Drehverbindung der Bauteile in der Baueinheit zu erwarten, da derartige Härteverzüge und Geometrieänderungen nicht prozesssicher vorherzusehen sind. Die Vorhaltemaße sind auch an vor ihrem Zusammenbau zur Baueinheit aus beschichteten Bauteilen in der Größe der zu erwartenden Schichtdicken zu berücksichtigen, so dass auch in diesem Fall zu große oder zu kleine Spiele in dem Schwenk- bzw. Drehsitz zu erwarten sind.

### Zusammenfassung der Erfindung

Die Aufgabe der Erfindung ist es daher, eine Baueinheit der gattungsbildenden Art zu schaffen, bei deren Zusammenbau die vorgenannten Nachteile vermieden sind.

Diese Aufgabe ist nach dem Gegenstand des kennzeichnenden Teils des Anspruchs 1 gelöst. So sieht die Erfindung ein Verfahren zur Herstellung einer derartigen Baueinheit vor, bei der zunächst die Einzelteile Träger und Maschinenteil einzeln hergestellt sind und dann im weichen unbehandelten Zustand miteinander verbunden sind. Nach der Montage der Bauteile zur Baueinheit folgt dann die Wärmebehandlung und wie in einer Ausgestaltung der Erfindung vorgesehen ist, eine Beschichtung.

Eine Baueinheit gemäß Erfindung kann sowohl mehrere der Träger aufweisen, an dem jeweils ein oder mehrere der Maschinenteile befestigt sind. Alternativ dazu ist die Baueinheit mit einem Träger versehen, an dem mehrere der Maschinenteile schwenkbar bzw. drehbar befestigt sind. Da die einzelnen Bauteile der Baueinheit nicht gehärtet (weich) zugeführt sind, ist auch das Schweißen und Verstemmen zum Verbinden der Bauteile anwendbar.

Die Baueinheit aus wenigstens den Bauteilen Träger und Maschinenteil sowie vorzugsweise aus einem Bolzen ist nach der Montage der Einzelteile oder auch nach der Montage von Unterbaugruppen aus den vorgenannten Einzelteilen einer Wärmebehandlung unterzogen. Unter Wärmebehandlung sind in diesem Falle alle Behandlungen zu verstehen, in der die Baugruppe in einer Zeitabfolge Temperaturen und ggf. zusätzlich anderen physikalischen und/oder chemischen Einwirkungen ausgesetzt ist. Diese Einwirkungen erhöhen wahlweise einzeln oder in Kombination miteinander die Härte, die Verschleißfestigkeit und die Korrosionsbeständigkeit wenigstens großer Bereiche der Oberfläche der Einzelteile der Baugruppe. Dabei ist den thermochemischen Behandlungen, bei denen hauptsächlich die Eigenschaften der Randschicht des Werkstoffes geändert werden, wie beispielsweise beim Einsatzhärten oder Nitrieren bzw. Nitrocarburieren, gegenüber den Verfahren, bei denen der Werkstoffzustand absichtlich im gesamten Querschnitt der Werkstücke verändert wird, wie z. B. beim Durchhärten, der Vorzug zu geben. Bei einer thermochemischen Behandlung bleibt, von wenigen Ausnahmen abgesehen, aufgrund der relativ niedrigen Temperaturen denen die Baugruppe während und bis zum Abschluss der Wärmebehandlung ausgesetzt ist, die Form der Einzelteile ohne wesentlichen Härteverzug (Verzugsarmut der Bauteile) erhalten.

Das Einsatzhärten als eine der Ausnahmen der thermochemischen Behandlung und das Durchhärten sind Wärmebehandlungen, die durch ihre hohen Temperaturen an einem Werkstück in der Regel zwangsläufig Verzug erzeugen. Eine Nacharbeit an den für die Baugruppe kritischen Stellen, insbesondere an dem Sitz des schwenkbaren Maschinenteiles auf einem Bolzen oder Zapfen ist nicht möglich und wegen hoher Kosten auch nicht erwünscht. Der Wärmeverzug ist deshalb bei den anfangs erwähnten Vorhaltetoleranzen zu berücksichtigen, so dass nach dem Härten in dem Sitz ein die Funktion nicht nachteilig beeinflussendes Spiel eingestellt ist.

Bevorzugte thermochemische Verfahren zur Behandlung von einer Baugruppe nach dem Gegenstand der Erfindung sind Nitrierverfahren. Dabei sind wahlweise entweder das bekannte Nitrieren bei Diffusion von Stickstoff, wie z. B. das Gasnitrieren und das Plasmanitrieren oder das der Fachwelt ebenso bekannte Nitrieren bei Diffusion von Stickstoff und Kohlenstoff, wie das Gasnitrocarburieren und Plasmanitrocarburieren, vorgesehen. Die Bauteile sind während derartiger Behandlungen, vergleichsweise zum Härten, niedrigeren Temperaturen ausgesetzt. Die Nitriertiefe (Nht) ist bei gleicher Oberflächenhärte im Vergleich zu der Einsatztiefe (Eht) beim Einsatzhärten geringer, da die Oberflächenspannungen an nitrierten Bauteilen größer sind.

Sowohl die verfahrenstypischen niedrigen Temperaturen als auch die geringe Nitriertiefe bewirken, dass die Einzelteile und die Baugruppen kaum Wärmeverzug aufweisen. Vorhaltetoleranzen bei der Herstellung der Einzelteile, insbesondere an dem Schwenk- oder Drehsitz des Maschinenteiles auf dem Bolzen, die bisher bei der Herstellung der Einzelteile durch den zu erwartenden und in seiner Größe schwer vorab einschätzbaren Wärmeverzug der miteinander zu fügenden Teile zu berücksichtigen waren, entfallen mit der Erfindung. Aufmaße an den Einzelteilen zur Nacharbeit des Härteverzugs sind mit der Erfindung nicht mehr vorgesehen.

Zu berücksichtigende Änderungen sind lediglich die Volumenzunahme der in Abhängigkeit von dem Werkstoff des Bauteiles eingelagerten Menge des Stickstoffes. Da das Volumen des behandelten Teiles zunimmt, bei einem Bolzen aus einem niedrig legierten Stahl z. B. für eine Nht von 0,4 bis 0,6 mm um 15 - 20µm, ist die Volumenzunahme, insbesondere beim Nitrieren im Gas und Plasma, gezielt zur Spieleinstellung in dem Dreh- bzw. Schwenksitz des Maschinenteiles auf dem Bolzen einsetzbar. Das z. B. für die einfache Montage einer Rolle auf einem Bolzen benötigte Spiel zwischen der Bohrung der Rolle und dem Außendurchmesser des Bolzens kann durch die Wärmebehandlung vorteilhaft verringert werden. Durch Messungen an erfindungsgemäß komplett gehärteten Baueinheiten konnte nachgewiesen werden, dass die Volumenzunahme innerhalb des Spaltes zwischen dem Bolzen und einem drehbaren Maschinenteil (Rolle) an den miteinander gepaarten Elementen unabhängig von der Dauer des Nitriervorganges nur so lange fortschreitet, bis in dem Ringspalt nicht mehr genügend Atmosphäre aus Gas oder Plasma an dieser Stelle vorhanden ist. Das Binden von Stickstoff ist damit in dem Ringspalt des Drehsitzes unabhängig von dem sich weiter an der Baueinheit fortsetzenden Nitriervorgang beendet. Ein vorteilhaftes geringes Spiel für eine gut funktionierende Schwenk- oder Drehverbindung ist eingestellt.

Die Festigkeit und Verschleißfestigkeit an der Oberfläche der Bauteile ist mittels des Nitrierverfahrens erhöht. Die Oberfläche des behandelten Materials weist verbesserte Gleiteigenschaften auf. Das ist insbesondere für die Drehverbindung zwischen dem Maschinenteil, vorzugsweise einer Rolle und dem Bolzen, und für den Gleit-Rollkontakt zwischen der Lauffläche der Rolle und einem von der Rolle beaufschlagten Getriebeteil vorteilhaft. Ein weiterer Vorteil liegt in der Kostenreduzierung durch Wegfallen der Arbeitsgänge, wie das Richten der Bauteile der Baueinheit auf Funktionsmaße und das Beseitigen von unerwünschten verfahrensbedingten Rückständen an der Oberfläche hauptsächlich in Löchern oder ähnlichem der Baugruppe.

Welche der Nitrierverfahren eingesetzt werden, hängt von verschiedenen Faktoren ab und ist im Einzelfall zu entscheiden. Eine bevorzugte Ausgestaltung der Erfindung sieht das Plasmanitrieren vor. Alternativ ist dazu jedoch auch das Gasnitrieren vorgesehen. Das Nitrieren ist für die Behandlung aller gebräuchlichen Eisenbasiswerkstoffe, Stahl und Guss sowie Sinterwerkstoffe geeignet, da diese fast alte gasnitriert und alle plasmanitriert werden können. Das ist insbesondere von Vorteil, da für die Einzelteile der Baugruppen nach dem Gegenstand der Erfindung häufig kaltumformbare kohlenstoffarme Stähle eingesetzt sind. Diese Werkstoffe der vorzugsweise Zieh-, Fließpress- oder Prägeteile für die Baugruppe gemäß Erfindung sind praktisch ohne das Aufkohlen der Randschichten mit dem anfangs erwähnten Einsatzhärteverfahren und der damit verbundenen Nachteile des Wärmeverzuges nicht zu härten. Das Nitrieren macht es möglich, auch diese Werkstoffe mit einer harten Randschicht zu versehen. Die Einzelteile der Baugruppe aus kohlenstoffarmen schweißbaren Stählen sind häufig, wie ein Bolzen an dem Träger, durch Schweißen aneinander befestigt. Das Schweißen ist problemlos möglich, da die Teile vor der Wärmebehandlung sowie vor einer sich der Wärmebehandlung anschließenden Beschichtung verschweißt sind. Zusätzlich ist von Vorteil, dass beim Plasmanitrieren nicht zu behandelnde Oberflächen an den Baugruppen durch Auftragen einer Kupferpaste oder Gewinde an den Einzelteilen der Baugruppen z. B. durch Einschrauben von Schrauben bzw. Aufschrauben von Muttern unkompliziert abzudecken sind.

Das Korrosionsverhalten an nietrierten Oberflächen, insbesondere an unlegierten und niedrig legierten Stählen ist durch die aus stabilen Nitrieden gebildete Verbindungsschicht verbessert. Die Korrosionsbeständigkeit ist durch das bekannte Nachoxidieren als ein Bestandteil der Nitrierbehandlung oder Oxidieren nach der Nitrierbehandlung weiter verbessert. Das Oxidieren ist ein besonders in der Großserien- und Massenproduktion der Automobilindustrie angewandtes Verfahren zur Verbesserung der Korrosionsfestigkeit. Eine derartige Schicht ist besonders von Vorteil, wenn die Baugruppen zumindest, wie bei Kräfträdern oder Schaltdomen an Getrieben teilweise ins Freie ragen. Das Nachoxidieren und Oxidieren ist ein thermochemisches Verfahren zur Beeinflussung der äußeren Randschicht. Die gesamte Randschicht setzt sich nach dem Nachoxidieren der Nitridschicht aus drei Zonen zusammen. Die erste Zone ist eine Diffusionsschicht, die den Übergang zum Grundmaterial bildet und die den darüberliegenden Schichtverbund stützt. Der ersten Zone schließt sich vom Grundwerkstoff weg nach außen eine harte und verschleißfeste Verbindungsschicht an, die im allgemeinen eine Schichtdicke von 15 - 30 µm aufweist. Die Oberfläche weist eine dritte Zone in Form einer dünnen Oxidschicht (z. B. 1 - 3 µm dick) aus Fe₃O₄ auf. Da die Einzelteile gemäß Erfindung vor der Wärmebehandlung zu einer Baugruppe miteinander verbunden sind, sind nach der Wärmebehandlung auch Schweißnähte und Materialausbrüche aus Verbindungen durch Fügen und Verstemmen mit einer korrosionsfesten Randschicht versehen, die wahlweise zusätzlich durch das Oxidieren korrosionsstabilisiert ist. Vorhaltetoleranzen bei der Herstellung der Einzelteile insbesondere an dem Schwenk- oder Drehsitz des Maschinenteiles auf dem Bolzen, die bisher wegen der vor dem Montieren der Teile auf die Teile aufgebrachten Beschichtungen zu berücksichtigen waren, sind aufgrund der Erfindung gegenstandslos.

### Beschreibung der Zeichnungen

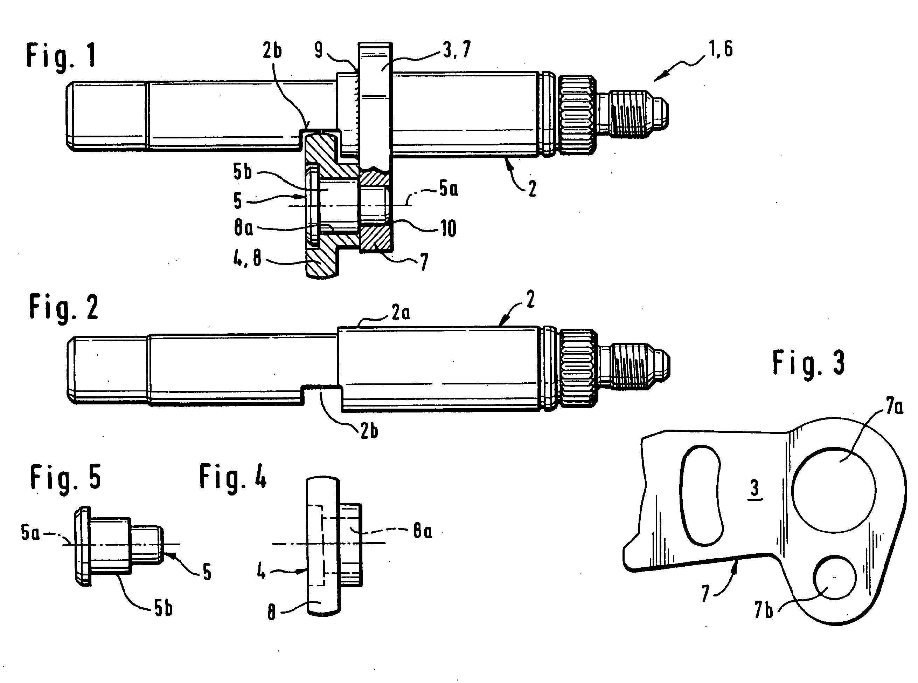

Figur 1 zeigt ein als Wählwelleneinheit 6 ausgeführtes Ausführungsbeispiel einer Baueinheit 1. In den Figuren 2 bis 4 sind die Einzelteile der Baueinheit 1 dargestellt. Die Baueinheit 1 weist eine Welle 2 auf, auf der ein Träger 3 in Form eines Wählhebels 7 sitzt. An dem Wählhebel 7 ist mittels eines Bolzens 5 das Maschinenteil 4 in Form einer Rolle 8 um die Drehachse 5a des Bolzens drehbar befestigt.

In Figur 2 ist die in einer Kombination von spanlos formgebenden Verfahren und spanabhebenden Verfahren hergestellte Welle 2 dargestellt. Der Träger 3 nach Figur 3 ist ein Stanzteil. Das als Rolle 8 ausgeführte Maschinenteil 4 nach Figur 4 ist spanlos durch Rollieren bzw. Fließpressen gefertigt und wahlweise in dem zylindrischen Durchgangsloch 8a spanabhebend nachgearbeitet. Der in Figur 5 dargestellte Bolzen 5 ist ein Fließpressteil. Alle aufgeführten Einzelteile der Baueinheit 1 sind aus kohlenstoffarmem Einsatzstahl (beispielsweise der Materialbezeichnung 16MnCr5) hergestellt. Die Einzelteile 2, 3, 4, 5 sind in folgender Reihenfolge zu der Baueinheit 1 montiert:
- Fügen des Wählhebels 7 mit dem Durchgangsloch 7a auf den Passsitz 2a der Welle 2 und Sichern mit einer Laserschweißnaht 9;
- Positionieren der Rolle 8 in der Ausnehmung 2b sowie Einführen des Bolzens 5 in das Durchgangsloch 8a;
- Einpressen des Bolzens 5 in das kreisrunde Durchgangsloch 7b sowie Sichern des Bolzens 5 an dem Träger 3 mittels einer Laserschweißnaht 10.

Im Anschluss an die Montage der Baueinheit 1 ist die Komplett-Wärmebehandlung vorgesehen. Dabei wird die Baueinheit 1 plasmanitriert, wobei sich eine Verbindungsschicht VS von 0,015 + 0,010 mm einstellt. Ein Radialspiel zwischen dem Durchgangsloch 8a der Rolle 8 und dem Drehsitz 5b verringert sich Volumenzunahme der Bauteile 5 und 4 um ca. 8 µm bis 12 µm und dabei so weit, bis die für die Wärmebehandlung erforderliche Plasma-Atmosphäre in dem Ringspalt um den Bolzen 5 nicht mehr ausreicht, um genügend Stickstoff zuzufügen. Es verbleibt ein Radialspiel von ca. 0,05 bis maximal 0,25 mm an dem Drehsitz. Nach der Wärmebehandlung ist die Baueinheit 1 vollständig mit einer harten Randschicht versehen, an der in der weiteren Wärmebehandlung mittels Oxidieren eine korrosionsfeste Oxidschicht von 1 µm + 1 µm aufgebracht ist.

### Bezugszeichen

- 1: Baueinheit
- 2: Welle
- 2a: Passsitz
- 3: Träger
- 4: Maschinenteil
- 5: Bolzen
- 5a: Drehachse
- 5b: Drehsitz
- 6: Wählwelleneinheit
- 7: Wählhebel
- 7a: Durchgangsloch
- 7b: Durchgangsloch
- 8: Rolle
- 8a: Durchgangsloch
- 9: Laserschweißnaht
- 10: Laserschweißnaht

## Patentansprüche

1. Baueinheit (1) einer Schalteinrichtung, wobei die Baueinheit (1) unabhängig von der Schalteinheit vorgefertigt ist und dabei in der Baueinheit (1) zumindest ein Maschinenteil (4) aus einem Eisenwerkstoff und wenigstens ein das Maschinenteil (4) tragender Träger aus einem Eisenwerkstoff zusammengefasst sind, wobei das Maschinenteil (4) um eine Drehachse (5a) relativ zu dem Träger (3) wenigstens schwenkbar mit dem Träger (3) verbunden ist, **dadurch gekennzeichnet, dass** die Baueinheit (1) zumindest teilweise eine harte Randschicht aus einer Komplett-Wärmebehandlung der Baueinheit (1) nach ihrer Montage aufweist.

2. Baueinheit nach Anspruch 1, **dadurch gekennzeichnet, dass** die Baueinheit (1) eine harte Randschicht aus einer thermochemischen Wärmebehandlung aufweist.

3. Baueinheit nach Anspruch 2, **dadurch gekennzeichnet, dass** die Randschicht eine Nitrierschicht aufweist, wobei die Nitrierschicht durch einen eisengebundenen Stickstoff gebildet ist.

4. Baueinheit nach Anspruch 2 oder 3, **dadurch gekennzeichnet, dass** die Randschicht nach außen eine Eisenoxidschicht der Zusammensetzung Fe₃O₄ aufweist.

5. Baueinheit nach Anspruch 1, **dadurch gekennzeichnet, dass** das Maschinenteil 4 eine drehbar auf einem Bolzen 5 befestigte Rolle 8 ist, wobei die Rolle 8 mit dem Träger 3 über den Bolzen 5 verbunden ist.

6. Verfahren zur Herstellung einer Baueinheit 1 gemäß dem Oberbegriff des Anspruchs 1, **gekennzeichnet durch** folgende Schritte:
- Herstellung des Trägers (3) und des Maschinenteils (4)
- Verbinden wenigstens des Trägers (3) und des Maschinenteils (4) zu der Baueinheit (1)
- Wärmebehandlung der Baueinheit (1).

7. Verfahren nach Anspruch 6, **dadurch gekennzeichnet, dass** die Baueinheit (1) zumindest abschnittsweise einer thermochemischen Wärmebehandlung unterzogen ist.

8. Verfahren nach Anspruch 7, **dadurch gekennzeichnet, dass** die Baueinheit (1) in einem Nitrierverfahren einer Wärmebehandlung unterzogen ist.

9. Verfahren nach Anspruch 8, **dadurch gekennzeichnet, dass** die Baueinheit (1) in einem Plasmanitrierverfahren einer Wärmebehandlung unterzogen ist.

10. Verfahren nach Anspruch 9, **dadurch gekennzeichnet, dass** sich dem Nitrierverfahren eine Nachoxidationsphase anschließt.

11. Verfahren nach Anspruch 9, **dadurch gekennzeichnet, dass** sich der Wärmebehandlung im Nitrierverfahren eine zumindest teilweise Oxidationsbehandlung der Oberfläche der Baueinheit (1) anschließt.

## Claims

1. Assembled unit (1) of a gearshift device, which assembled unit (1) is prefabricated independently of the gearshift unit and said assembled unit (1) comprising at least one machine component (4) made of a ferrous material and at least one carrier that is made of a ferrous material and supports the machine component (4), said machine component (4) being connected to the carrier (3) at least for pivoting about an axis of rotation (5a) relative to the carrier (3), **characterised in that** the assembled unit (1) comprises, at least partially, a hard surface layer formed by a complete hardening treatment of the assembled unit (1) after the mounting thereof.

2. Assembled unit according to claim 1, **characterised in that** the assembled unit (1) comprises a hard surface layer made by a thermo-chemical heat treatment.

3. Assembled unit according to claim 2, **characterised in that** the surface layer comprises a nitride layer which is formed by an iron-linked nitrogen.

4. Assembled unit according to claim 2 or 3, **characterised in that** the surface layer comprises, towards the outside, an iron oxide layer with the composition Fe₃O₄.

5. Assembled unit according to claim 1, **characterised in that** the machine component (4) is a roller (8) that is fixed for rotation on a pin (5), the roller (8) being connected to the carrier (3) by means of the pin (5).

6. Method of making an assembled unit (1) according to the preamble of claim 1, **characterised by** the following steps:
- making the carrier (3) and the machine component (4)
- connecting at least the carrier (3) and the machine component (4) to form the assembled unit (1)
- heat treatment of the assembled unit (1).

7. Method according to claim 6, **characterised in that** the assembled unit (1) is subjected, at least in parts, to a thermo-chemical heat treatment.

8. Method according to claim 7, **characterised in that** the assembled unit (1) is subjected to a heat treatment in a nitriding process.

9. Method according to claim 8, **characterised in that** the assembled unit (1) is subjected to a heat treatment in a plasma nitriding process.

10. Method according to claim 9, **characterised in that** the nitriding process is followed by a re-oxidation phase.

11. Method according to claim 9, **characterised in that** the heat treatment in the nitriding process is followed by an at least partial oxidation treatment of the surface of the assembled unit (1).

## Revendications

1. Ensemble unitaire (1) d'un dispositif de changement de vitesse, ledit ensemble unitaire (1) étant préfabriqué indépendamment de l'ensemble de changement de vitesse, ledit ensemble unitaire (1) étant composé, au moins, d'un composant de machine (4) fait en un matériau ferreux et d'un support qui est fait en un matériau ferreux et supporte le composant de machine (4), ledit composant de machine (4) étant relié au support (3), au moins, en pivotement par rapport au support (3) autour d'un axe de rotation (5a), **caractérisé en ce que** l'ensemble unitaire (1) comprend, au moins partiellement, une zone superficielle dure formée par un traitement thermique complet de l'ensemble unitaire (1) après son montage.

2. Ensemble unitaire selon la revendication 1, **caractérisé en ce que** l'ensemble unitaire (1) comprend une zone superficielle dure formée par un traitement thermique thermochimique.

3. Ensemble unitaire selon la revendication 2, **caractérisé en ce que** la zone superficielle comprend une couche nitrurée qui est formée au moyen d'un nitrogène relié au fer.

4. Ensemble unitaire selon la revendication 2 ou 3, **caractérisé en ce que** la zone superficielle comprend, vers l'extérieur, une couche d'oxyde de fer de la constitution Fe₃O₄.

5. Ensemble unitaire selon la revendication 1, **caractérisé en ce que** le composant de machine (4) est un galet (8) fixé en rotation sur un axe (5), ledit galet (8) étant relié au support (3) au moyen de l'axe (5).

6. Méthode de fabrication d'un ensemble unitaire (1) selon le préambule de la revendication 1, **caractérisée par** les pas suivants :
- fabrication du support (3) et du composant de machine (4)
- reliage, au moins, du support (3) et du composant de machine (4) pour former l'ensemble unitaire (1)
- traitement thermique de l'ensemble unitaire (1).

7. Méthode selon la revendication 6, **caractérisée en ce que** l'ensemble unitaire (1) est soumis, au moins en parties, à un traitement thermique thermochimique.

8. Méthode selon la revendication 7, **caractérisée en ce que** l'ensemble unitaire (1) est soumis à un traitement thermique en un procédé de nitruration.

9. Méthode selon la revendication 8, **caractérisée en ce que** l'ensemble unitaire (1) est soumis à un traitement thermique en un procédé de nitruration au laser.

10. Méthode selon la revendication 9, **caractérisé en ce que** le procédé de nitruration est suivi d'une phase d'oxydation subséquente.

11. Méthode selon la revendication 9, **caractérisée en ce que** le traitement thermique en le procédé de nitruration est suivi d'un traitement d'oxydation, au moins partiel, de la surface de l'ensemble unitaire (1).
